# EUROPÄISCHE PATENTSCHRIFT

(11) **EP 0 271 167 B1**
(45) Veröffentlichungstag und Bekanntmachung des Hinweises auf die Patenterteilung: **03.11.1993**
(21) Anmeldenummer: 87202453.4
(22) Anmeldetag: 09.12.1987
(51) Int. Cl.: G11B 5/53, G11B 5/56

(54) **Verfahren zum Justieren der Spalte von zwei auf einer Kopfscheibe angeordneten Magnetköpfen und Kopfscheibe mit zwei auf ihr angeordneten Magnetköpfen**
Method for adjusting the gap of two magnetic heads arranged on a head wheel, and head wheel with two magnetic heads arranged on it
Procédé pour ajuster l'entrefer de deux têtes magnétiques disposées sur un disque porte-tête et disque porte-tête comportant deux têtes magnétiques disposées sur lui

(30) Priorität: 10.12.1986 AT 3278/86
(43) Veröffentlichungstag der Anmeldung: 15.06.1988
(73) Patentinhaber: Philips Electronics N.V., 5621 BA Eindhoven (NL)
(72) Erfinder: Binder-Kriegelstein, Wolfgang, NL-5656 AA Eindhoven (NL)
(74) Vertreter: Smit, Frederik Jan

(56) Entgegenhaltungen:
- EP-A- 0 066 331
- DE-A- 2 755 287
- DE-A- 3 121 791
- DE-A- 3 421 219
- PATENT ABSTRACTS OF JAPAN, Band 9, Nr. 276 (P-402)(1999), 2. November 1985; JP-A-60 119620
- PATENT ABSTRACTS OF JAPAN, Band 10, Nr. 338 (P-516)(2394), 15. November 1986; JP-A-61 139916

## Beschreibung

Die Erfindung betrifft ein Verfahren zum Justieren der Spalte von zwei auf einer Kopfscheibe angeordneten Magnetköpfen, die in einer Ebene nebeneinander liegen und mittels eines ihnen gemeinsamen Trägerplättchens auf der im Betrieb rotierend antreibbaren Kopscheibe angeordnet werden, wobei das Trägerplättchen an einem Ende mit einem Schlitz versehen wird, wodurch zwei von einem Basisteil des Trägerplättchens auskragende Lappen gebildet werden, an deren freien Enden je einer der beiden Magnetköpfe an der gleichen Seitenfläche der Lappen angebracht wird, wonach das Trägerplättchen mit seinem Basisteil an der Kopfscheibe befestigt wird und danach die beiden Magnetköpfe mit ihren auf die Kopfbreite bezogenen Spaltmitten in Bezug auf die Kopfscheibe auf ein vorgegebenes Niveau justiert werden. Bei einem aus der DE-OS 31 21 791 bekannten Trägerplättchen, das zwei von einem Basisteil auskragende Lappen aufweist, an deren freien Enden je einer der beiden Magnetköpfe an der gleichen Seitenfläche der Lappen angebracht ist, ist zum Justieren der auf die Kopfbreite bezogenen Spaltmitten in Bezug auf ein vorgegebenes Niveau gegenüber einer Kopfscheibe vorgesehen, daß auf jedem der beiden Lappen eine Gewindebohrung angebracht ist, in welche je eine mit der Kopfscheibe zusammenwirkende Justierschraube einschraubbar ist. Der Basisteil des Trägerplättchens dient dabei zur Befestigung des Trägerplättchens an der Kopfscheibe. Auf diese Weise sind die Lagen der Spalte der beiden Magnetköpfe je für sich justierbar. Eine derartige im Betrieb rotierend antreibbare Kopfscheibe mit zwei auf ihr angeordneten Magnetköpfen dient zur Aufzeichnung bzw. Wiedergabe von Signalen in sehr schmalen nebeneinander liegenden Spuren auf einem bandförmigen Aufzeichnungsträger. Demgemäß sind bekanntlich die Abmessungen derartiger Magnetköpfe relativ klein, was damit auch für das Trägerplättchen mit den beiden nebeneinander leigenden Lappen gilt. Das Vorsehen von zwei knapp nebeneinander liegenden Justierschrauben, die zwischen je einem der beiden Lappen und der Kopfscheibe wirksam sind, macht wegen der Kleinheit des Trägerplättchens beziehungsweise der Lappen desselben aus Platzgründen konstruktive Schwierigkeiten, wobei auch noch ein sehr genaues Justieren erreicht werden soll.

Die Erfindung hat sich zum Ziel gesetzt, ein wie eingangs angeführtes Verfahren zum Justieren der Spalte von zwei auf einer Kopfscheibe angeordneten Magnetköpfen so auszugestalten, daß es besonders einfach und genau ist und keine konstruktiven Schwierigkeiten mit sich bringt. Erfindungsgemäß ist hiezu vorgesehen, daß die beiden auf den Lappen des Trägerplättchens angebrachten Magnetköpfe am Trägerplättchen hinsichtlich des Abstandes ihrer auf die Kopfbreite bezogenen Spaltmitten von der eine Bezugsfläche bildenden, mit den die Magnetköpfe tragenden Seitenflächen der Lappen des Trägerplättchens niveaumäßig übereinstimmende Seitenfläche des Basisteiles des Trägerplättchens vermessen werden, wobei der Magnetkopf mit dem kleineren Abstand festgestellt wird, wonach bei festgehaltenem Basisteil des Trägerplättchens auf den Übergangsbereich des den Magnetkopf mit dem kleineren Abstand tragenden Lappens zum Basisteil des Trägerplättchens, von der dem Magnetkopf abgewandten Seite her, mit einem Kerbwerkzeug ein solcher Druck ausgeübt wird, daß der Lappen im wesentlichen als Ganzes so weit abgeknickt wird, bis die auf die Kopfbreite bezogene Spaltmitte des auf ihm angeordneten Magnetkopfes auf dem gleichen Niveau liegt, wie die auf die Spaltbreite bezogene Spaltmitte des auf dem anderen Lappen angeordneten Magnetkopfes, daß danach Trägerplättchen mit der die Bezugsfläche bildenden Seitenfläche des Basisteiles der Kopfscheibe zugewandt, mit dem im wesentlichen von den Lappen abgewandten Bereich des Basisteiles an der Kopfscheibe befestigt wird, wonach mit einer zwischen dem in wesentlichen den Lappen zugewandten Bereich des Basisteiles des Trägerplättchens und der Kopfscheibe wirksamen Justierschraube durch Verbiegen dieses Bereiches des Basisteiles des Trägerplättchens beide Magnetköpfe gemeinsam mit ihren auf die Kopfbreite bezogenen Spaltmitten in Bezug auf die Kopfscheibe auf des vorgegebene Niveau justiert werden. Auf diese Weise werden die beiden Magnetköpfe zuerst mit ihren auf die Kopfbreite bezogenen Spaltmitten in Bezug auf eine Bezugsfläche des Basisteiles des Trägerplättchens auf gleiches Niveau gebracht und dann nach der Montage des Trägerplättchens an der Kopfscheibe mit einer zwischen dem Basisteil und der Kopfscheibe wirksamen Justierschraube gemeinsam auf das vorgegebene Niveau gegenüber der Kopfscheibe justiert. Somit ist nur eine einzige Justierschraube erforderlich, die mit dem gegenüber den beiden Lappen größerflächigeren Basisteil des Trägerplättchens zusammenwirkt, wodurch es aus Platzgründen keine konstruktiven Schwierigkeiten gibt. Mit einem derartigen Verfahren wird auch ein sehr genaues Justieren der Spalte auf das vorgegebene Niveau genenüber der Kopfscheibe erreicht.

Weiters betrifft die Erfindung eine Kopfscheibe mit zwei auf ihr angeordneten Magnetköpfen, die in einer Ebene nebeneinander liegen und mittels eines ihnen gemeinsamen Trägeplättchens auf der im Betreibe rotierend antreibbaren Kopfscheibe angeordnet sind, wobei nach dem im vorstehenden angeführten erfindungsgemäßen Verfahren die auf die Kopfbreite bezogenen Spaltmitten der Spalte der beiden Magnetköpfe in Bezug auf die Kopfscheibe auf ein vorgegebenes Niveau justiert sind.

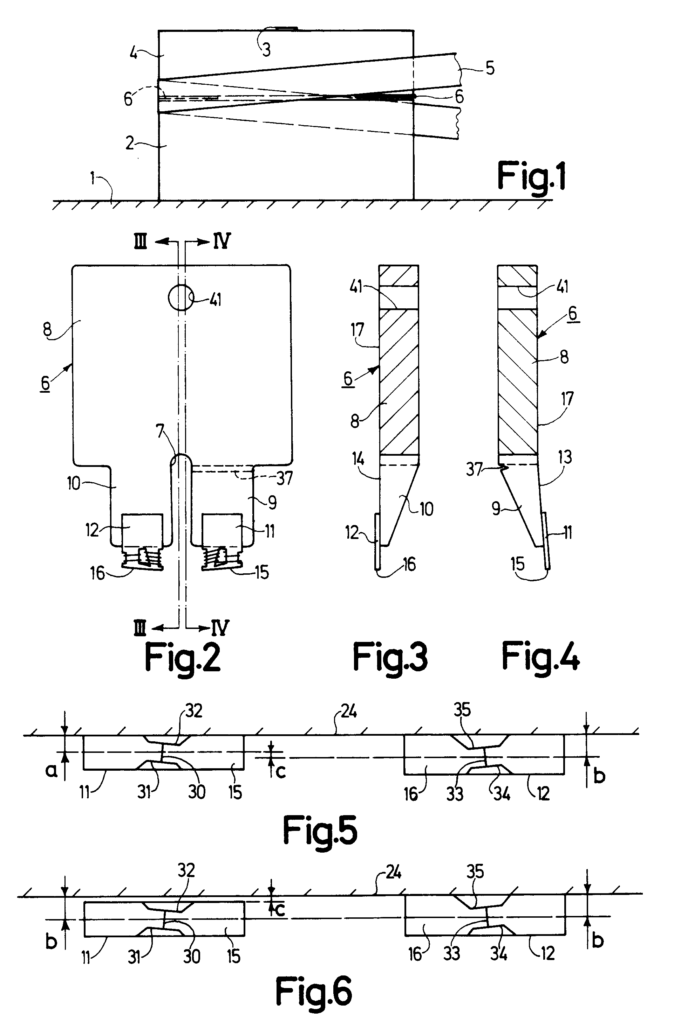

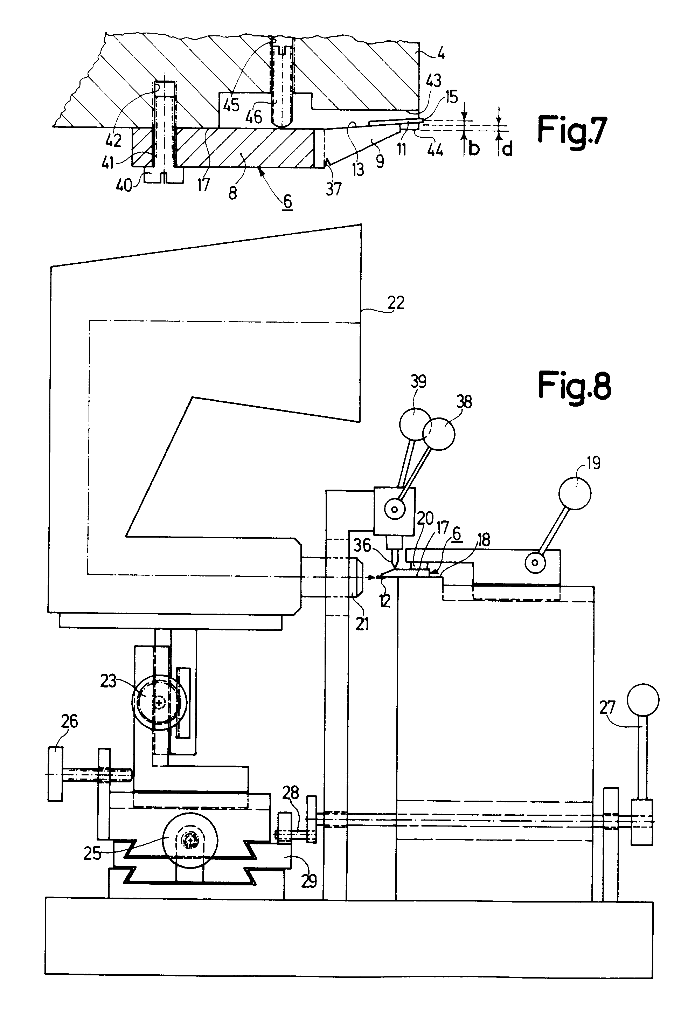

Das erfindungsgemäße Verfahren und eine nach diesem Verfahren hergestellte erfindungsgemäße Kopfscheibe werden im folgenden anhand der Zeichnungen näher erläutert. Fig.1 zeigt in Seitenansicht eine Kopfscheibe wie sie im Betrieb verwendet wird. Fig.2 zeigt in Draufsicht ein Trägerplättchen mit zwei Lappen, an deren freien Enden je ein Magnetkopf angebracht ist. Fig.3 zeigt eine Schnitt des Trägerplättchens nach Fig.2 gemäß der Linie III-III in Fig.2. Fig.4 zeigt einen Schnitt des Trägerplättchens nach Fig.2 gemäß der Linie IV-IV in Fig.2. Fig.5 zeigt schematisch eine Draufsicht auf die Laufflächen der beiden Magnetköpfe, bevor ihre auf die Kopfbreite bezogenen Spaltmitten auf gleiches Niveau gebracht wurden. Fig.6 zeigt in der gleichen Darstellungsweise wie Fig.5 die beiden Magnetköpfe nach dem ihre auf die Kopfbreite bezogenen Spaltmitten auf gleiches Niveau gebracht wurden. Fig.7 zeigt im Schnitt eine Kopfscheibe mit dem auf ihr montierten Trägerplättchen nach Fig.2, das hiebei im Schnitt nach der Linie IV-IV in Fig.2 gezeigt ist. Fig.8 zeigt in Seitenansicht eine Justiervorrichtung wie sie im Zuge der Durchführung des erfindungsgemäßen Verfahrens verwendet wird. Es sei erwähnt, daß wegen der sich in der Praxis ergebenden Kleinheit der Magnetköpfe die Zeichnungen nicht maßstabsgetreu sind.

In Fig.1 ist mit 1 das Chassis eines Aufzeichnungs- und/oder Wiedergabegerätes bezeichnet, auf dem eine stillstehende Trommel 2 angeordnet ist. Koaxial zu dieser Trommel 2 verläuft eine von einem Motor her antreibbare Antriebswelle 3, auf der eine einen gleichen Durchmesser wie die Trommel 2 aufweisende Kopfscheibe 4 klemmend befestigt ist. Die Kopfscheibe 4 ist dabei auf der Antriebswelle 3 so angeordnet, daß sich zwischen ihr und der Trommel 2 ein schmaler Spalt ergibt, in dessen Bereich die auf der Kopfscheibe 4 angeordneten Magnetköpfe mit einem abschnittsweise schraubenlinienförmig um die Mantelflächen der Trommel 2 und der Kopfscheibe 4 verlaufenden bandförmigen Aufzeichnungsträgers 5 zusammenwirken, wobei sie auf demselben schräg verlaufende, nebeneinander liegende Spuren abtasten. Im vorliegenden Fall ist angenommen, daß an der Kopfscheibe 4 zwei einander diametral gegenüberliegende Trägerplättchen 6 angeordnet sind, welche die Magnetköpfe tragen. Aus Gründen der Signalverarbeitung ist es dabei vielfach erforderlich, daß auf mindestens einem Trägerplättchen 6 zwei Magnetköpfe angeordnet sind, die in einer Ebene nebeneinander liegen, wobei sich ihre auf die Kopfbreite bezogenen Spaltmitten genau auf einem vorgegebenen Niveau gegenüber der Kopfscheibe 4 befinden müssen, damit die Spuren am Aufzeichnungsträger richtig abgetastet werden. Um dieser Anforderung gerecht zu werden, sind vielfach Justiermaßnahmen für die Magnetköpfe erforderlich.

In den Figuren 2, 3 und 4 ist nun ein solches Trägerplättchen 6 dargestellt, das an einem Ende mit einem Schlitz 7 versehen ist, wodurch zwei von einem Basisteil 8 des Trägerplättchens auskragende Lappen 9 und 10 gebildet werden, an deren freien Enden je ein Magnetkopf 11 bzw. 12 angebracht ist. Die beiden Magnetköpfe 11 und 12 sind dabei an gleichen Seitenflächen 13 bzw. 14 der Lappen 9 und 10 angeordnet, so daß sie in einer Ebene nebeneinander liegen. Aufgebaut sind die beiden Magnetköpfe 11 und 12 in üblicher Weise, indem sie zwei mit Wicklungen versehene, einen Magnetkreis bildende Schenkel aufweisen, die zusammen an ihrem freien Ende eine Lauffläche 15 bzw. 16 bilden, in die ein Luftspalt des Magnetkreises mündet. Im Betrieb wirken dies Laufflächen 15 und 16 der beiden Magnetköpfe 11 und 12 mit dem Aufzeichnungsträger 5 zusammen. Der Basisteil 8 des Trägerplättchens 6 dient zur Befestigung desselben an der Kopfscheibe 4, wobei die mit den die Magnetköpfe 11 und 12 tragenden Seitenflächen 13 und 14 der Lappen 9 und 10 des Trägerplättchens niveaumäßig übereinstimmende Seitenfläche 17 des Basisteiles 8 des Trägerplättchens 6 eine Bezugsfläche bildet, mit der das Trägerplättchen der Kopfscheibe zugewandt an dieser montiert wird, wie dies Fig.7 zeigt. Im Zuge der Herstellung der Magnetköpfe kann es dazu kommen, daß ihre auf die Kopfbreite bezogenen Spaltmitten der Luftspalte, im weiteren kurz Spalte genannt, gegenüber der durch die Seitenfläche 17 des Basisteiles 8 des Trägerplättchens 6 gebildeten Bezugsfläche ungleiche Abstände haben, was anhand der Fig.5 näher erläutert wird.

Die Fig.5 zeigt schematisch eine Ansicht auf die Laufflächen 15 und 16 der beiden Magnetköpfe 11 und 12 in ihrer Lage auf einer in Fig.8 gezeigten Justiervorrichtung. Das Trägerplättchen 6 wird hiebei mit der die Bezugsfläche bildenden Seitenfläche 17 ihres Basisteiles 8 auf einen Tisch 18 der Justiervorrichtung aufgelegt und dort mit einer durch einen Hebel 19 betätigbaren Klemmvorrichtung 20 festgehalten, wobei, die die Magnetköpfe 11 und 12 tragenden Lappen 9 und 10 frei über den Tisch 18 hinausragen. Die Magnetköpfe 11 und 12 liegen dabei einem Mikroskop 21, an das ein Sichtgerät 22 angeschlossen ist, gegenüber, so daß ihre Laufflächen 15 und 16 beobachtbar sind. Das Mikroskop 21 wird dabei mit einer Einstellvorrichtung 23 höhenmäßig so eingestellt, daß eine Maßstabsmarke, mit der die Bezugsfläche bildenden Seitenfläche 17 des Basisteiles 8 des Trägerplättchens 6 bzw. der Auflagefläche des Tisches 18 übereinstimmt. Diese Bezugsfläche ist in Fig.5 durch eine mit einer Schraffur versehenen Linie 24 angedeutet. Mit einer zweiten Einstellvorrichtung 25 wird das Mikroskop 21 quer zu den Magnetköpfen 11 und 12 auf einen der beiden Magnetköpfe eingestellt und das am Sichtgerät 22 erscheinende Bild mit einer dritten Einstellvorrichtung 26 scharf eingestellt. Mit einem von einem Hebel 27 betätigbaren Exzenter 28, der auf einen Schlitten 29 einwirkt, kann dann das Mikroskop 21 in Richtung quer zu den Magnetköpfen in eine zweite Position gebracht werden, in der der andere Magnetkopf sichtbar ist.

In Fig.5 ist der in die Lauffläche 15 des Magnetkopfes 11 mündende Spalt, der hier wie üblich einen vorgegebenen Azimutwinkel hat, was aber nicht zwingend notwendig ist, mit 30 bezeichnet, wobei durch seitliche Ausnehmungen 31 und 32 in bekannter Weise die Spaltbreite festgelegt ist. Analog dazu ist beim Magnetkopf 12, dessen Spalt mit 33 bezeichnet, und die die Spaltbreite begrenzenden Ausnehmungen tragen die Bezugszeichen 34 und 35. Bei der Herstellung der Magnetköpfe kann es beispielsweise dazu kommen, daß die Magnetköpfe ungleich breit sind oder daß die die Spaltbreite begrenzenden seitlichen Ausnehmungen bei an sich gleicher Spaltbreite der Magnetköpfe von Magnetkopf zu Magnetkopf auf unterschiedlichen Niveaus liegen. Derartige Einflüsse haben zur Folge, daß nach dem Anbringen der Magnetköpfe 11 und 12 an den Lappen 9 und 10 des Trägerplättchens 6 ihre auf die Kopfbreite bezogenen Spaltmitten, im folgenden kurz Spaltmitten genannt, gegenüber der die Bezugsfläche bildenden Seitenfläche 17 des Basisteiles 8 des Trägerplättchens 6 ungleichen Abstand haben. Beim vorliegenden Ausführungsbeispiel ist, wie aus Fig.5 ersichtlich ist, beispielsweise angenommen, daß der Magnetkopf 11 geringere Breite als der Magnetkopf 12 hat. Demgemäß hat die Spaltmitte des Magnetkopfes 11 den Abstand a von der durch die Linie 24 angedeuteten Bezugsfläche und die Spaltmitte des Magnetkopfes 12 den Abstand b von derselben, wobei a kleiner ist als b. Um die Differenz c zwischen a und b liegen daher die Spaltmitten der beiden Magnetköpfe 11 und 12 auf unterschiedlichen Niveaus gegenüber der durch die Linie 24 angedeuteten Bezugsfläche.

Gemäß dem vorliegenden Verfahren wird nun vorerst dieser Unterschied in den Niveaus der Spaltmitten der beiden Magnetköpfe ausgeglichen. Hiezu werden in der Justiervorrichtung nach Fig.8 mit dem Mikroskop 21 die Spaltmitten der beiden Magnetköpfe 11 und 12 hinsichtlich ihres Abstandes, von der die Bezugsfläche bildenden Seitenfläche 17 des Basisteiles 8 des Trägerplättchens 6 vermessen, wobei der Magnetkopf mit dem kleineren Abstand festgestellt wird. Im vorliegenden Fall ist dies der Magnetkopf 11. Bei mit der Klemmvorrichtung 20 am Basisteil 8 festgehaltenen Trägerplättchens 6 wird nun mit einem Kerbwerkzeug 36 auf den Übergangsbereich des den Magnetkopf 11 tragenden Lappens 9 zum Basisteil 8 des Trägerplättchens 6 von der dem Magnetkopf 11 abgewandten Seite her ein solcher Druck ausgeübt, daß der Lappen 9 als Ganzes so weit abgeknicht wird, bis die Spaltmitte des auf ihm angeordneten Magnetkopfes 11 auf dem gleichen Niveau liegt, wie die Spaltmitte des am anderen Lappen 10 angeordneten Magnetkopfes 12, was mit dem Mikroskop 21 festgestellt wird. Diese Situation zeigt Fig.6, gemäß welcher der Abstand a um den Betrag c gegenüber der durch die Linie 24 angedeuteten Bezugsfläche vergrößert wurde, so daß nunmehr die Spaltmitten beider Magnetköpfe 11 und 12 im Abstand b zur Bezugsfläche liegen. Aus Fig.4 ist dabei ersichtlich, daß der Lappen 9 im wesentlichen als Ganzes abgeknickt wurde, wobei sich im Übergangsbereich des Lappens 9 zum Basisteil 8 des Trägerplättchens 6 eine Kerbe 37 gebildet hat, dies zufolge des mit dem Kerbwerkzeug 36 ausgeübten Druckes auf diesen Übergangsbereich zwischen dem Lappen 9 und Basisteil 8 des Trägerplättchens 6. Wichtig ist dabei, daß der Lappen 9 im wesentlichen als Ganzes abgeknickt wird, damit seine den Magnetkopf 11 tragende Seitenfläche 13 nicht deformiert wird, was zu einer Beschädigung des Magnetkopfes führen könnte.

Bei der Justiervorrichtung nach Fig.8 sind zwei in der Ansicht dieser Figur hintereinander liegende Kerbwerkzeuge 36 vorgesehen, von welchen jedes einem der beiden Übergangsbereiche zwischen den Lappen 9 und 10 zum Basisteil 8 des Trägerplättchens 6, von der den Magnetköpfen 11 und 12 abgewandten Seite her, gegenüberliegt, wobei jedes für sich mit einem Hebel 38 bzw. 39 betätigbar ist, um den erforderlichen Druck aufzubringen. Auf diese Weise ist keine Verstellung des Kerbwerkzeuges auf den jeweiligen Übergangsbereich, auf den Druck ausgeübt werden soll, erforderlich, sondern es wird einfach dasjenige Kerbwerkzeug betätigt, das dem übergangsbereich gegenüberliegt, auf den ein Druck auszuüben ist, um die Spaltmitten der beiden Magnetköpfe auf gleiches Niveau zu bringen. Die Kerbwerkzeuge sind im vorliegenden Fall schneidenförmig ausgebildet, und reichen im wesentlichen quer über die ganzen Übergangsbereiche. Selbstverständlich wäre es aber auch möglich, die Kerbwerkzeuge so ausbilden, daß nur lokal begrenzt Kerbwirkungen entstehen, beispielsweise an einigen Punkten des betreffenden Übergangsbereiches.

Nachdem auf diese Weise die Spaltmitten der beiden Magnetköpfe 11 und 12 auf gleiches Niveau gegenüber der die Bezugsfläche bildenden Seitenfläche 17 des Basisteiles 8 des Trägerplättchens 6 gebracht wurden, wird das Trägerplättchen mit der vorgenannten Bezugsfläche der Kopfscheibe 4 zugewandt an dieser befestigt, wie dies Fig.7 zeigt. Die Befestigung wird dabei so gewählt, daß sie in einem im wesentlichen von den Lappen 9 und 10 abgewandten Bereich des Basisteiles 8 des Trägerplättchens 6 erfolgt, damit der verbleibende Abschnitt des Trägerplättchens nicht festgehalten ist. Im vorliegenden Fall geschieht diese Befestigung mit einer Schraube 40, die durch eine Bohrung 41 im Basisteil 8 des Trägerplättchens 6 hindurchragt und in eine Gewindebohrung 42 an der Kopfscheibe 4 eingreift. Hiebei ist zur Freistellung der Magnetköpfe 11 und 12, der diese tragenden Lappen 9 und 10 sowie des diesen Lappen 9 und 10 im wesentlichen zugewandten Bereiches des Basisteiles 8 des Trägerplättchens 6 in der Kopfscheibe eine Ausnehmung 43 vorgesehen, so daß diese Teile frei auskragen.

Nach dieser Montage des Trägerplättchens 6 an der Kopfscheibe 4 befinden sich somit die Spaltmitten der beiden Magnetköpfe 11 und 12 auf einem Niveau im Abstand b, von der die Bezugsfläche bildenden Seitenfläche 17 des Basisteiles 8 des Trägerplättchens 6, die mit der seitlichen Begrenzungsfläche 44 der Kopfscheibe 44 zusammenfällt, an der das Trägerplättchen 6 befestigt ist. Es sei nun angenommen, daß das gegenüber der Kopfscheibe 4 vorgegebene Niveau, auf welches die Spaltmitten der beiden Magnetköpfe 11 und 12 justiert werden sollen, im Abstand d von der seitlichen Begrenzungsfläche 44 der Kopfscheibe 4 liegen soll, wie dies in Fig.7 angedeutet ist. Hiezu ist an der Kopfscheibe 4 eine in einer Gewindebohrung 45 verdrehbare Justierschraube 46 vorgesehen, die mit ihrem freien Ende mit dem im wesentlichen den Lappen 9 und 10 zugewandten Bereich des Basisteiles 8 des Trägerplättchens 6 zusammenwirkt. Auf diese Weise sind bei Betätigung der Justierschraube 46 durch Verbiegen diese Bereiches des Basisteiles 8 des Trägerplättchens 6, wobei auch die beiden Lappen 9 und 10 gleichförmig mitverstellt werden, beide Magnetköpfe gemeinsam mit ihren Spaltmitten auf das im Abstand d von der seitlichen Begrenzungsfläche 44 der Kopfscheibe 4 liegende vorgegebene Niveau justierbar. Wie ersichtlich, ist somit nur eine Justierschraube 46 erforderlich, die mit dem gegenüber den Lappen 9 und 10 breiteren Basisteil 8 des Trägerplättchens 6 zusammenwirkt, was einfach und ohne Platzschwierigkeiten zu realisieren ist.

Das Wesentliche des vorliegenden Verfahrens besteht somit darin, daß zuerst die Spaltmitten beider Magnetköpfe auf gleiches Niveau gegenüber einer Bezugsfläche des Trägerplättchens gebracht und anschließend, nach der Befestigung des Trägerplättchens an der Kopfscheibe, mit einer Justierschraube gemeinsam auf das vorgegebene Niveau gegenüber der Kopfschiebe justiert werden.

## Patentansprüche

1. Verfahren zum Justieren der Spalte (30,33) von zwei auf einer Kopfscheibe (4) angeordneten Magnetköpfen (11,12), die in einer Ebene nebeneinander liegen und mittels eines ihnen gemeinsamen Trägerplättchens (6) auf der im Betrieb rotierend antreibbaren Kopfscheibe (4) angeordnet werden, wobei das Trägerplättchen (6) an einem Ende mit einem Schlitz (7) versehen wird, wodurch zwei von einem Basisteil des Trägerplättchens auskragende Lappen (9,10) gebildet werden, an deren freien Enden je einer der beiden Magnetköpfe (11,12) an der gleichen Seitenfläche der Lappen (9,10) angebracht wird, wonach des Trägerplättchen (6) mit seinem Basisteil an der Kopfscheibe (4) befestigt wird und danach die beiden Magnetköpfe (11,12) mit ihren auf die Kopfbreite bezogenen Spaltmitten in Bezug auf die Kopfscheibe auf ein vorgegebenes Niveau justiert werden, dadurch gekennzeichnet, daß die beiden auf den Lappen (9,10) des Trägerplättchen (6) angebrachten Magnetköpfe (11,12) am Trägerplättchen (6) hinsichtlich des Abstandes ihrer auf die Kopfbreite bezogenen Spaltmitten von der eine Bezugsfläche bildenden, mit den die Magnetköpfe (11,12) tragenden Seitenflächen der Lappen (9,10) des Trägerplättchens (6) niveaumäßig übereinstimmende Seitenfläche des Basisteiles des Trägerplättchens (6) vermessen werden, wobei der Magnetkopf mit dem kleineren Abstand festgestellt wird, wonach bei festgehaltenem Basisteil des Trägerplättchens (6), auf den Übergangsbereich des den Magnetkopf mit dem kleineren Abstand tragenden Lappens zum Basisteil des Trägerplättchens, von der dem Magnetkopf (11) abgewandten Seite her, mit einem Kerbwerkzeug (36) ein solcher Druck ausgeübt wird, daß der Lappen (9) im wesentlichen durch plastische Verformung als Ganzes so weit bleibend abgeknickt wird, bis die auf die Kopfbreite bezogene Spaltmitte des auf ihm angeordneten Magnetkopfes (11) auf dem gleichen Niveau liegt, wie die auf die Kopfbreite bezogene Spaltmitte des auf dem anderen Lappen angeordneten Magnetkopfes (12), daß danach des Trägerplättchen (6), mit der die Bezugsfläche bildenden Seitenfläche des Basisteiles der Kopfscheibe (4) zugewandt, mit dem im wesentlichen von den Lappen (9,10) abgewandten Bereich des Basisteiles an der Kopfscheibe (4) befestigt wird, wonach mit einer zwischen dem im wesentlichen den Lappen (9,10) zugewandten Bereich des Basisteiles des Trägerplättchens (6) und der Kopfscheibe (4) wirksamen Justierschraube (46) durch Verbiegen dieses Bereiches des Basisteiles des Trägerplättchens (6) beide Magnetköpfe (11,12) gemeinsam mit ihren auf die Kopfbreite bezogenen Spaltmitten in Bezug auf die Kopfscheibe (4) auf das vorgegebene Niveau justiert werden.

## Claims

1. A method of adjusting the gaps (30, 33) of two magnetic heads (11, 12) arranged on one head disc (4), which heads are disposed adjacent one another in one plane and are arranged on the head disc (4), which is rotatable in operation, by means of a common supporting plate (6), one end portion of the supporting plate (6) being provided with a slot (7) to form two limbs (9,10) which project from a basic portion of the supporting plate and whose free ends each carry one of the two magnetic heads (11, 12) arranged on the same main surfaces of the limbs (9, 10), the supporting plate (6) being secured to the head disc (4) with its basic portion after which the head-width-related gap centres of the two magnetic heads are adjusted to a predetermined level relative to the head disc, characterized in that the distances between the head-width-related gap centres of the two magnetic heads (11, 12), which heads are arranged on the limbs (9, 10) of the supporting plate (6), and a main surface of the basic portion of the supporting plate, which main surface constitutes a reference surface and corresponds in level to the main surfaces of the limbs (9, 10) of the supporting plate (6) which carry the magnetic heads (11, 12), are measured to determine the magnetic head with the smaller distance, after which the basic portion of the supporting plate (6) is fixed and a notching tool (36) exerts a pressure on the transition between the limb carrying the magnetic head with the smaller distance and the basic portion of the supporting plate from the side which is remote from the magnetic head (11) to permanently offset substantially the entire limb (9) by plastic deformation until the head-width-related gap centre of the magnetic head (11) on said limb is situated at the same level as the head-width-related gap centre of the magnetic head (12) on the other limb, in that subsequently the supporting plate (6), with the main surface of the basic portion which constitutes the reference surface facing the head disc (4), is secured to the head disc (4) in the area of the basic portion which is substantially remote from the limb (9, 10), after which by means of a set-screw (46), which acts between the area of the basic portion of the supporting plate (6) which substantially faces the limbs (9, 10) and the head disc (4), said area of the basic portion of the supporting plate (6) is bent to adjust the head-width-related gap centres of both magnetic heads (11, 12) together to the predetermined level relative to the head disc (4).

## Revendications

1. Procédé permettant d'ajuster les entrefers (30, 33) de deux têtes magnétiques (11, 12) agencées sur un disque porte-têtes (4), qui sont disposées l'une à côte de l'autre dans un plan et sont montées à l'aide d'une plaquette de support (6) qui leur est commune sur le disque porte-têtes (4) qui, en fonctionnement, peut être entraîné en rotation, la plaquette de support (6) étant dotée à une extrémité d'une fente (7) formant deux languettes (9, 10) qui font saillie d'une partie de base de la plaquette de support et à l'extrémité libre de chacune desquelles une des deux têtes magnétiques (11, 12) est montée sur la même surface latérale des languettes, après quoi la plaquette de support (6) est fixée par sa partie de base sur le disque perte-têtes (4) et les deux têtes magnétiques (11, 12) sont ensuite ajustées de façon que les milieux de leurs entrefers dans le sens de la largeur des têtes soient situés à un niveau prédéfini part rapport au disque porte-têtes (4), caractérisé en ce que les deux têtes magnétiques (11, 12) montées sur les languettes (9, 10) de la plaquette de support (6) sont mesurées sur la plaquette de support (6), pour ce qui concerne la distance séparant les milieux de leurs entrefers, dans le sens de la largeur des têtes, de la surface latérale de la partie de base de la plaquette de support (6) qui forme une surface de référence et coïncide, au point de vue niveau, avec les surfaces latérales des languettes (9, 10) de la plaquette de support (6) portant les têtes magnétiques (11, 12), de sorte que la tête magnétique présentant le plus petit écart est déterminée, après quoi la partie de base de la plaquette de support (6), étant immobilisée sur la zone de transition de la languette portant la tête magnétique de moindre écart à la partie de base de la plaquette de support (6), du côté opposé à la tête magnétique (11), est exercée à l'aide d'un outil d'entaillage (36), une pression telle que la languette (9) soit en substance dans son ensemble pliée de manière permanente par déformation plastique au point que le milieu de l'entrefer dans le sens de la largeur de tête de la tête magnétique (11) agencée sur cette languette se trouve au même niveau que le milieu de l'entrefer dans le sens de la largeur de tête de la tête magnétique (12) agencée sur l'autre languette, ensuite la plaquette de support (6) est fixée sur le disque porte-têtes (4) par la surface latérale de la partie de base formant la surface de référence, tournée vers le disque porte-têtes (4), et par la zone de la partie de base opposée en substance aux languettes (9, 10), après quoi, à l'aide d'une vis de réglage (46) agissant entre la zone de la partie de base de la plaquette de support (6) proche en substance des languettes et le disque porte-têtes (4), par pliage de cette zone de la partie de base de la plaquette de support (6), les deux têtes magnétiques (11, 12), sont ajustées conjointement de manière que les milieux de leurs entrefers dans le sens de la largeur des têtes soient situés au niveau prédéfini par rapport au disque porte-têtes (4).
